# EUROPEAN PATENT APPLICATION

(11) **EP 4 086 679 A1**
(43) Date of publication of application: **09.11.2022**
(21) Application number: 21172731.8
(22) Date of filing: 07.05.2021
(51) Int. Cl.: G02B 6/44

(54) **PRE-SPLICED OPTICAL FIBER CABLES**

(71) Applicant: Triarca A/S, 8783 Hornsyld (DK)
(72) Inventor: Christensen, Henrik Sandahl, 7000 Fredericia (DK)
(74) Representative: Patrade A/S

(57) **Abstract**

A method and components for connecting an external communication network 12 to multiple user networks of stationary structures 7, comprising a main cabinet 8, at least one sub-cabinet 1 placed at a location physically in the vicinity of a part of the stationary structures 7, connecting each of the sub-cabinets 1 to the main cabinet 8 by a pre-spliced optical-fiber main cable 5, connecting the sub-cabinet 1 to each of the at least one user networks of the stationary structure 7 by a pre-spliced optical-fiber sub-cable 3, such as to provide the connection between the external communication network and the multiple user networks of stationary structures 7.

## Description

### Field of the invention

The present invention relates to the field of optical fiber communication networks and in particular to the field of methods and components for connecting an external communications network to a plurality of users distributed in stationary structures.

### Background of the invention

Stationary communication networks are required for providing end user networks in various stationary structures such as houses and apartments with access to an external communication network via a local sub-cabinet and a main cabinet via optical fiber cables typically placed underground for protection and visual acceptability. In many counties, such communication networks are established not only to companies and public institutions but also to houses, apartments and various other stationary structures such as monitoring stations and the like.

With the outbreak of coronavirus in Wuhan, China, in 2019, turning into a pandemic with widespread lockdown of societies throughout the globe, the ensuing "working from home" requirement has created a need for establishing communication networks for citizens at their homes at an ever accelerating pace.

US2005/0175307A1 discloses an optical connection closure for use at a branch point in a fiber optic communications network.

US2006/0275007A1 discloses a fan-out unit for an optical fiber transmission system, comprising a plurality of optical fibers and a faceplate with a plurality of ports arranged in at least one row.

WO2007/033408A1 discloses a method for holding uncut optic fibers in an access enclosure having a support structure and separating a loop of uncut optic fiber from a fiber optic cable and storing two portions thereof on trays and routing a third portion thereof about the support structure.

US9467756B2 discloses a modular system for connecting an external communication network to a user network of a building where a distribution box is placed inside the building.

There remains a need to establish optical fiber communication network to stationary structures such as building and houses quicker and more cost-effectively.

### Summary of the invention

According to the present invention, the inventors have realized the need to improve the methods and components used to establish optical-fiber connections between an external communication network and multiple user networks of stationary structures, e.g. buildings. In particular, the simplicity and the quickness of deployment of such network connections are needed to achieve reduction of costs and required labor.

In a first aspect, the present invention provides a method for connecting an external communication network 12 to multiple user networks of stationary structures 7, comprising
a) providing a main cabinet 8 placed at a location physically in the vicinity of the stationary structures 7 each having at least one user network to be connected,
b) providing at least one sub-cabinet 1 placed at a location physically in the vicinity of a part of the stationary structures 7 each having at least one user network to be connected,
c) for each of the sub-cabinets connecting the sub-cabinet 1 to the main cabinet 8 by a pre-spliced optical-fiber main cable 5 as defined below in the second aspect of the invention,
d) for each of the stationary structures 7 each having at least one user network to be connected, connecting the sub-cabinet 1 to each of the at least one user network of the stationary structure 7 by a pre-spliced optical-fiber sub-cable 3 as defined below in the fourth aspect of the invention,
e1) wherein the blunt end of the sub-cable 3 is blown through a cable duct 4 from the sub-cabinet 1 to the stationary structure 7 and connected to the user network, and the one or two connectors 11 of the sub-cable 3 is/are connected in the sub-cabinet 1 to the main connector(s) 2, or
e2) wherein the blunt end of the sub-cable 3 is blown through a cable duct 4 from the stationary structure 7 to the sub-cabinet 1 and connected to the main-connector 2, and the one or two connectors 11 of the sub-cable 3 is/are connected to the user network of the stationary structure 7,
such as to provide the connection between the external communication network and the multiple user networks of stationary structures 7.

It is to be understood that in step c) of the method, the pre-spliced optical-fiber main cable 5 is advantageously blown through a cable duct from the sub-cabinet and to the main cabinet, such that the main connector on the cable is ready for mounting in the sub-cabinet.

For the pre-spliced optical-fiber sub-cable 3, this may also advantageously be blown through a cable duct, but here the direction of the blowing may be either from the sub-cabinet towards the end user network in the stationary structure (giving a cable with connector at the sub-cabinet), or the direction of the blowing may be from the end user network at the stationary structure towards the sub-cabinet (giving a cable with connector at the end user network at the stationary structure). Hence, it is possible to select which end of the cable to fit into a connector out in the field. In the majority of situations, it will be preferable to blow the cable from the sub-cabinet towards the end user at the stationary structure, because the sub-cabinet is the more crowded place in terms of cable, connectors and cable ducts.

The present invention eliminates the need for splicing the optical fibers main cable to the main connector 2 out in the street at the site of the sub-cabinets, and it also eliminates the need for splicing in the street the optical fiber sub-cable connecting a sub-cabinet to the end user network in a stationary structure 7, such as a building, house or other structure having a stationary location. Such splicing is typically done in a van at the site of installation and is tedious and time consuming.

To realize the inventive method of the present invention there is a need for new components, such pre-spliced cables which have a connector in one end, and the other end can be blown through cable ducts prior to mounting the connector.

Hence, in a second aspect, the present invention provides a pre-spliced coiled optical-fiber main cable 5 comprising multiple optical fibers and a substantially cylindrical structure 9 around which the pre-spliced coiled optical-fiber main cable 5 is coiled, each optical fiber at one and the same end being spliced into a main-connector 2, and the single main-connector or all the main-connectors are attached to the substantially cylindrical structure 9 at one or both of the flat ends, and the multiple optical fibers at the other ends being blunt or protected by a cap such that this end of the cable can be blown through a cable duct 6.

In a third aspect, the present invention provides a packaged and pre-spliced coiled optical-fiber main cable 5 comprising a packaging and a substantially cylindrical structure 9 around which the optical-fiber main cable is coiled, wherein the optical-fiber cable comprises multiple optical fibers each at the inner-end of the coil being spliced into a main-connector 2, and the single main-connector or all the main-connectors are attached to the substantially cylindrical structure 9 at one or both of the flat ends, and the multiple optical fibers each at the outer-end of the coil being blunt or protected by a cap.

In a fourth aspect, the present invention provides a pre-spliced optical-fiber sub-cable 3 comprising one or two optical-fibers each at one and the same end being spliced into a connector 11, such as both optical-fibers being spliced into a single connector 11, and the other end of the optical-fiber sub-cable being blunt or protected by a cap.

In a fifth aspect, the present invention provides a packaged and pre-spliced coiled optical-fiber sub-cable 3 comprising a packaging and a substantially cylindrical structure 9 around which the optical-fiber sub-cable is coiled, wherein the optical-fiber sub-cable comprises one or two optical fibers each at the inner-curl end being spliced into a connector 11, such as both optical fibers being spliced into a single connector 11, and the single connector or the two connectors are attached to the substantially cylindrical structure 9 at one of the flat ends, and at the other (outer coil) end the fiber-optical sub-cable being blunt or protected by a cap.

In a sixth aspect, the present invention provides a kit of matching parts comprising at least one packaged and pre-spliced coiled optical-fiber main cable 5 as defined above in the second aspect of the invention and at least five packaged and rolled-up pre-spliced optical-fiber sub-cables 3 as defined above in the fifth aspect of the invention, wherein the connector 2 or connectors 2 at the end of the at least one packaged and coiled pre-spliced optical-fiber main cable 5 fit the connectors 11 at the end of each of the at least five packaged and coiled pre-spliced optical-fiber sub-cables 3.

### Brief description of the drawings

Figure 1 is a graphical illustration depicting the connection between the external communication network 12 to the user network in the stationary structures 7.
Figure 2 is a graphical illustration depicting the pre-spliced optical fiber main cable 5 connecting the main cabinet 8 with the sub-cabinets 1, and the pre-spliced optical fiber sub-cables 3 connecting the sub-cabinets 1 with the user networks in the stationary structures 7.
Figure 3 is a graphical illustration of the pre-spliced coiled optical-fiber main cable 5 comprising multiple optical fibers and a substantially cylindrical structure 9 around which the pre-spliced coiled optical-fiber main cable 5 is coiled.
Figure 4 is a graphical illustration of the pre-spliced coiled optical-fiber main cable 5 (left) and the pre-spliced optical-fiber sub-cable 3 (right) comprising one or two optical-fibers and each at one and the same end being spliced into a connector 11.

### Detailed description of the invention

The specification may be best understood with reference to the detailed figures and description including clauses set forth herein. Various embodiments are described hereinafter with reference to the figures. However, those skilled in the art will readily appreciate that the detailed description given herein with respect to these figures is for explanatory purposes as the method and the components for use herein extend beyond the described embodiments.

In the following specification and the claims, reference will be made to a number of terms which shall be defined to have the following meanings.

The singular forms "a", "an" and "the" include plural references unless the context clearly dictates otherwise.

As used herein, the term "user network" is intended to represent a network having a capacity appropriate for being supported by one or two optical fibers, e.g. in a house or a traffic monitoring station.

As used herein, the term "stationary structure" is intended to encompass any physical structures, wherein a user network connection may be useful. Non-limiting examples of a stationary structure is e.g. a house, an apartment, a building, a meteorological station, a traffic surveillance building or cabinet, a water level monitoring station and the like.

As used herein, the term "pre-spliced" in relation to an optical-fiber cable is intended to mean that the cable has been spliced to a connector indoor in a factory setting thus giving a higher level of uniformity of the spliced cable.

As used herein, the term "optical-fiber main cable" is intended to mean a cable comprising a plurality of optical-fibers suitable for connecting a main cabinet and a sub-cabinet, where the sub-cabinet provides connections to a plurality of user networks of stationary structures.

As used herein, the term "optical-fiber sub-cable" is intended to mean a cable comprising one or two optical fibers suitable for connecting a user network of a stationary structure to a sub-cabinet, where the latter is connected to a main cabinet providing access to the external communication network.

The embodiments of methods and components for connecting an external communication network to multiple user networks of stationary structures overcome a number of deficiencies of known methods and components and provide an effective and quick way of connecting an external communication network to multiple user networks of stationary structures.

Specifically, the embodiments described herein overcome the difficulties in splicing and placing optical fibers in larger or crowded sub-cabinets and difficulties in the installation requiring highly skilled technicians which are scarcely available during fast roll out of network communication systems nowadays.

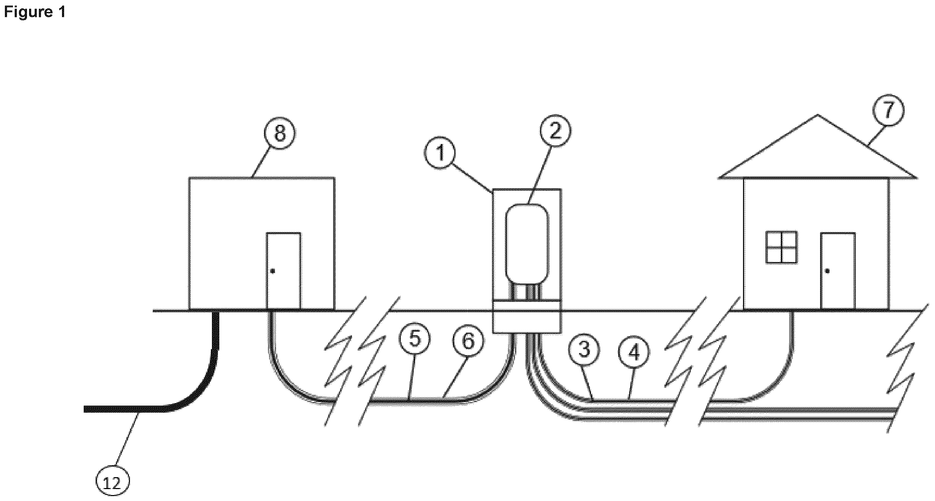

With reference to Figure 1, the present invention provides a method for establishing the depicted connection between a user network in the stationary structure 7 being a house. A pre-spliced optical-fiber sub-cable 3 has been placed in a cable duct between the house and the sub-cabinet 1, the latter collecting optical-fiber sub-cables from a multitude of houses and connecting them to the main connector 2. The main connector 2 is pre-spliced to the optical-fiber main cable 5 which is placed in the cable duct 6 between the sub-cabinet 1 and the main cabinet 8. The main cabinet 8 has a connection 12 to the external communication network to which the user network of the stationary structure is to be connected.

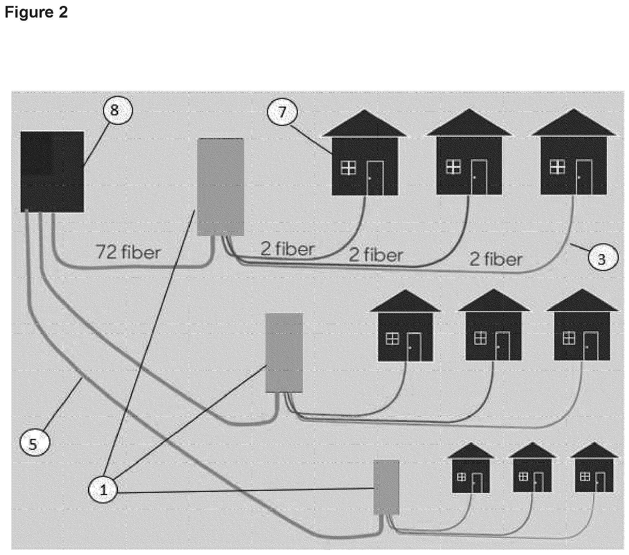

Figure 2 is an exemplary embodiment, where several pre-spliced coiled optical-fiber main cables 5 comprising 72 optical fibers have been installed and connected to several sub-cabinets 1. From each of the sub-cabinets 1, a pre-spliced coiled optical-fiber sub-cable having two optical fibers has been installed and connected to each of the user networks in stationary structures 7, here being houses.

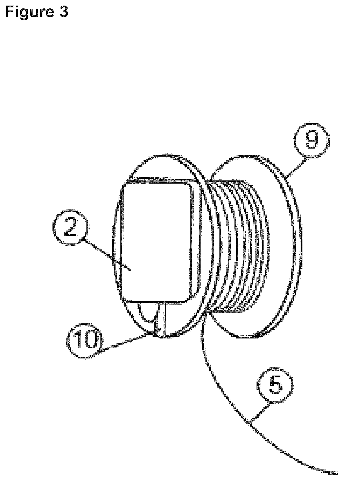

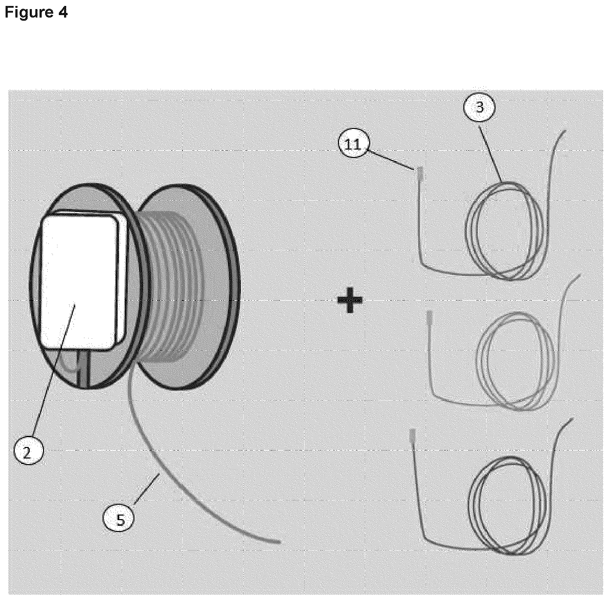

An exemplary embodiment of a pre-spliced coiled optical-fiber main cable is shown in figures 3 and 4. The pre-spliced coiled optical-fiber main cable 5 has a blunt end or an end protected by a cap, and the inner coil end is pre-spliced to a main connector 2 which is placed on one of the flat ends of the cylindrical structure 9 around which the main cable is coiled. In this exemplary embodiment the main cable is placed is a slit at the end of the cylindrical structure so that it is firmly fixed. Figure 4 shows the exemplary embodiment of a kit comprising the pre-spliced coiled optical-fiber main cable 5 (left) together with three pre-spliced coiled optical-fiber sub-cables 3. Each of the pre-spliced coiled optical-fiber sub-cables 3 has a blunt end or an end protected by a cap, and an end where the optical-fiber(s) is spliced to a connector 11.

Various aspects and embodiments of the present invention are defined by the following numbered clauses:
1. A method for connecting an external communication network 12 to multiple user networks of stationary structures 7, comprising
   a) providing a main cabinet 8 placed at a location physically in the vicinity of the stationary structures 7 each having at least one user network to be connected,
   b) providing at least one sub-cabinet 1 placed at a location physically in the vicinity of a part of the stationary structures 7 each having at least one user network to be connected,
   c) for each of the sub-cabinets connecting the sub-cabinet 1 to the main cabinet 8 by a pre-spliced optical-fiber main cable 5 as defined in any of clauses 5-7,
   d) for each of the stationary structures 7 each having at least one user network to be connected, connecting the sub-cabinet 1 to each of the at least one user network of the stationary structure 7 by a pre-spliced optical-fiber sub-cable 3 as defined in clause 7,
   e1) wherein the blunt end of the sub-cable 3 is blown through a cable duct 4 from the sub-cabinet 1 to the stationary structure 7 and connected to the user network, and the one or two connectors 11 of the sub-cable 3 is/are connected in the sub-cabinet 1 to the main connector(s) 2, or
   e2) wherein the blunt end of the sub-cable 3 is blown through a cable duct 4 from the stationary structure 7 to the sub-cabinet 1 and connected to the main-connector 2, and the one or two connectors 11 of the sub-cable 3 is/are connected to the user network of the stationary structure 7,
   such as to provide the connection between the external communication network and the multiple user networks of stationary structures 7.
2. The method according to clause 1, wherein in step c) the pre-spliced optical-fiber main cable 5 is blown through a cable duct from the sub-cabinet to the main cabinet.
3. The method according to any of clauses 1-2, wherein the blunt end of the sub-cable 3 is blown through a cable duct from the sub-cabinet 1 to the stationary structure 7 and connected to the user network, and the one or two connectors 11 of the sub-cable 3 is/are connected in the sub-cabinet 1 to the main connector(s) 2.
4. The method according to any of clauses 1-2, wherein the blunt end of the sub-cable 3 is blown through a cable duct from the stationary structure 7 to the sub-cabinet 1 and connected to the main-connector 2, and the one or two connectors 11 of the sub-cable 3 is/are connected to the user network of the stationary structure 7.
5. The method according to any of clauses 1-4, wherein the pre-spliced optical-fiber main cable 5 has at least 12 optical-fibers, at least 24 optical-fibers, at least 36 optical-fibers, at least 72 optical-fibers or 144 optical-fibers.
6. The method according to any of clauses 1-5, wherein the pre-spliced optical-fiber sub-cable has one or two optical-fibers.
7. A pre-spliced coiled optical-fiber main cable 5 comprising multiple optical fibers and a substantially cylindrical structure 9 around which the pre-spliced coiled optical-fiber main cable 5 is coiled, each optical fiber at one and the same end being spliced into a main-connector 2, and the single main-connector or all the main-connectors are attached to the substantially cylindrical structure 9 at one or both of the flat ends, and the multiple optical fibers at the other ends being blunt or protected by a cap such that this end of the cable can be blown through a cable duct 6.
8. The pre-spliced coiled optical-fiber main cable according to clause 7, wherein said cable comprises at least 12 optical fibers being spliced into a single main-connector 2.
9. The pre-spliced coiled optical-fiber main cable according to clause 7, wherein said multiple optical fibers are spliced into at least two main-connectors 2.
10. The pre-spliced coiled optical-fiber main cable according to any of clauses 7-9, having at least 12 optical-fibers, at least 24 optical-fibers, at least 36 optical-fibers or at least 72 optical-fibers.
11. A packaged and pre-spliced coiled optical-fiber main cable 5 comprising a packaging and a substantially cylindrical structure 9 around which the optical-fiber main cable is coiled, wherein the optical-fiber cable comprises multiple optical fibers each at the inner-end of the coil being spliced into a main-connector 2, and the single main-connector or all the main-connectors are attached to the substantially cylindrical structure 9 at one or both of the flat ends, and the multiple optical fibers each at the outer-end of the coil being blunt or protected by a cap.
12. The packaged and pre-spliced coiled optical-fiber main cable according to clause 11, wherein said cable comprises at least 12 optical fibers being spliced into a single main-connector 2.
13. The packaged and pre-spliced coiled optical-fiber main cable according to clause 11, wherein said multiple optical fibers are spliced into at least two main-connectors 2.
14. A pre-spliced optical-fiber sub-cable 3 comprising one or two optical-fibers each at one and the same end being spliced into a connector 11, such as both optical-fibers being spliced into a single connector 11, and the other end of the optical-fiber sub-cable being blunt or protected by a cap.
15. A packaged and pre-spliced coiled optical-fiber sub-cable 3 comprising a packaging and a substantially cylindrical structure 9 around which the optical-fiber sub-cable is coiled, wherein the optical-fiber sub-cable comprises one or two optical fibers each at the inner-curl end being spliced into a connector 11, such as both optical fibers being spliced into a single connector 11, and the single connector or the two connectors are attached to the substantially cylindrical structure 9 at one of the flat ends, and at the other (outer coil) end the fiber-optical sub-cable being blunt or protected by a cap.
16. A kit of matching parts comprising at least one packaged and pre-spliced coiled optical-fiber main cable 5 as defined in any of clauses 7-10 and at least five packaged and pre-spliced coiled optical-fiber sub-cables 3 as defined in clause 14, wherein the connector 2 or connectors 2 at the end of the at least one packaged and coiled pre-spliced optical-fiber main cable 5 fit the connectors 11 at the end of each of the at least five packaged and coiled pre-spliced optical-fiber sub-cables 3.
17. The kit of matching parts according to clause 16 consisting of one packaged and pre-spliced coiled optical-fiber main cable 5.
18. The kit of matching parts according to any of clauses 16-17, wherein said at least one packaged and pre-spliced coiled optical-fiber main cable 5 comprises at least 12, at least 32 or at least 72 optical-fibers being spliced into one or more main-connectors 2.
19. The kit of matching parts according to any of clauses 16-18, wherein the at least five packaged and pre-spliced coiled optical-fiber sub-cables 3 all have the same length.
20. The kit of matching parts according to any of clauses 16-18, wherein the at least five packaged and pre-spliced coiled optical-fiber sub-cables 3 have at least two different lengths.

### List of reference numerals.

- 1: sub-cabinet
- 2: main connector
- 3: optical fiber sub-cable
- 4: cable duct for optical fiber sub-cable
- 5: optical fiber main cable
- 6: cable duct for optical fiber main cable
- 7: stationary structure
- 8: main cabinet (POP station)
- 9: substantially cylindrical structure
- 10: slit
- 11: connector
- 12: external communication network

## Claims

1. A method for connecting an external communication network 12 to multiple user networks of stationary structures 7, comprising
a) providing a main cabinet 8 placed at a location physically in the vicinity of the stationary structures 7 each having at least one user network to be connected,
b) providing at least one sub-cabinet 1 placed at a location physically in the vicinity of a part of the stationary structures 7 each having at least one user network to be connected,
c) for each of the sub-cabinets connecting the sub-cabinet 1 to the main cabinet 8 by a pre-spliced optical-fiber main cable 5 as defined in any of claims 5-7,
d) for each of the stationary structures 7 each having at least one user network to be connected, connecting the sub-cabinet 1 to each of the at least one user network of the stationary structure 7 by a pre-spliced optical-fiber sub-cable 3 as defined in claim 7,
e1) wherein the blunt end of the sub-cable 3 is blown through a cable duct 4 from the sub-cabinet 1 to the stationary structure 7 and connected to the user network, and the one or two connectors 11 of the sub-cable 3 is/are connected in the sub-cabinet 1 to the main connector(s) 2, or
e2) wherein the blunt end of the sub-cable 3 is blown through a cable duct 4 from the stationary structure 7 to the sub-cabinet 1 and connected to the main-connector 2, and the one or two connectors 11 of the sub-cable 3 is/are connected to the user network of the stationary structure 7,
such as to provide the connection between the external communication network and the multiple user networks of stationary structures 7.

2. The method according to claim 1, wherein in step c) the pre-spliced optical-fiber main cable 5 is blown through a cable duct from the sub-cabinet to the main cabinet.

3. The method according to any of claims 1-2, wherein the blunt end of the sub-cable 3 is blown through a cable duct from the sub-cabinet 1 to the stationary structure 7 and connected to the user network, and the one or two connectors 11 of the sub-cable 3 is/are connected in the sub-cabinet 1 to the main connector(s) 2.

4. The method according to any of claims 1-2, wherein the blunt end of the sub-cable 3 is blown through a cable duct from the stationary structure 7 to the sub-cabinet 1 and connected to the main-connector 2, and the one or two connectors 11 of the sub-cable 3 is/are connected to the user network of the stationary structure 7.

5. A pre-spliced coiled optical-fiber main cable 5 comprising multiple optical fibers and a substantially cylindrical structure 9 around which the pre-spliced coiled optical-fiber main cable 5 is coiled, each optical fiber at one and the same end being spliced into a main-connector 2, and the single main-connector or all the main-connectors are attached to the substantially cylindrical structure 9 at one or both of the flat ends, and the multiple optical fibers at the other ends being blunt or protected by a cap such that this end of the cable can be blown through a cable duct 6.

6. The pre-spliced coiled optical-fiber main cable according to claim 5, wherein said cable comprises at least 12 optical fibers being spliced into a single main-connector 2.

7. The pre-spliced coiled optical-fiber main cable according to claim 5, wherein said multiple optical fibers are spliced into at least two main-connectors 2.

8. A packaged and pre-spliced coiled optical-fiber main cable 5 comprising a packaging and a substantially cylindrical structure 9 around which the optical-fiber main cable is coiled, wherein the optical-fiber cable comprises multiple optical fibers each at the inner-end of the coil being spliced into a main-connector 2, and the single main-connector or all the main-connectors are attached to the substantially cylindrical structure 9 at one or both of the flat ends, and the multiple optical fibers each at the outer-end of the coil being blunt or protected by a cap.

9. The packaged and pre-spliced coiled optical-fiber main cable according to claim 8, wherein said cable comprises at least 12 optical fibers being spliced into a single main-connector 2.

10. The packaged and pre-spliced coiled optical-fiber main cable according to claim 8, wherein said multiple optical fibers are spliced into at least two main-connectors 2.

11. A pre-spliced coiled optical-fiber sub-cable 3 comprising one or two optical-fibers each at one and the same end being spliced into a connector 11, such as both optical-fibers being spliced into a single connector 11, and the other end of the optical-fiber sub-cable being blunt or protected by a cap.

12. A packaged and pre-spliced coiled optical-fiber sub-cable 3 comprising a packaging and a substantially cylindrical structure 9 around which the optical-fiber sub-cable is coiled, wherein the optical-fiber sub-cable comprises one or two optical fibers each at the inner-curl end being spliced into a connector 11, such as both optical fibers being spliced into a single connector 11, and the single connector or the two connectors are attached to the substantially cylindrical structure 9 at one of the flat ends, and at the other (outer coil) end the fiber-optical sub-cable being blunt or protected by a cap.

13. A kit of matching parts comprising at least one packaged and pre-spliced coiled optical-fiber main cable 5 as defined in any of claims 5-7 and at least five packaged and pre-spliced coiled optical-fiber sub-cables 3 as defined in claim 12, wherein the connector 2 or connectors 2 at the end of the at least one packaged and pre-spliced coiled optical-fiber main cable 5 fit the connectors 11 at the end of each of the at least five packaged and pre-spliced coiled optical-fiber sub-cables 3.

14. The kit of matching parts according to claim 13, consisting of one packaged and pre-spliced coiled optical-fiber main cable 5.

15. The kit of matching parts according to any of claims 13-14, wherein said at least one packaged and pre-spliced coiled optical-fiber main cable 5 comprises at least 12, at least 32 or at least 72 optical-fibers being spliced into one or more main-connectors 2.
